# EUROPEAN PATENT APPLICATION

(11) **EP 4 800 066 A1**
(43) Date of publication of application: **02.09.2026**
(21) Application number: 24882777.6
(22) Date of filing: 22.10.2024
(51) Int. Cl.: C08L 25/12, C08L 55/02, C08F 212/10, C08F 220/40

(54) **RESIN COMPOSITION AND PREPARATION METHOD THEREFOR**

(30) Priority: 23.10.2023 KR 20230142385
(71) Applicant: LG Chem, Ltd., Seoul 07336 (KR)
(72) Inventor: LIM, Jong Won, Daejeon 34122 (KR); HEO, Jae Won, Daejeon 34122 (KR); KIM, Yoo Vin, Daejeon 34122 (KR); HAN, Hye Soo, Daejeon 34122 (KR); KIM, Chang Hoe, Daejeon 34122 (KR); LEE, Ji Eun, Daejeon 34122 (KR)
(74) Representative: Vossius & Partner Patentanwälte Rechtsanwälte mbB
(86) International application number: PCT/KR2024/016087
(87) International publication number: WO 2025/089750

(57) **Abstract**

According to the present invention, there is provided a resin composition containing an appropriate amount of a crosslinked copolymer satisfying a particle diameter (D₅₀) in a desirable range, at which the cumulative percentage based on weight reaches 50% on the particle size distribution chart, and also satisfying an average H-W ratio in a desirable range, and a first matrix copolymer containing an aromatic vinyl monomer unit, a vinyl cyanic monomer unit, and an alkyl (meth)acrylate monomer unit. The resin composition is excellent in all of mechanical characteristics such as surface characteristics, matte characteristics, and scratch resistance.

## Description

### TECHNICAL FIELD

### Cross-reference to Related Applications

This application claims the benefit of Korean Patent Application No. 2023-0142385, filed on October 23, 2023, in the Korean Intellectual Property Office, the disclosure of which is incorporated in the present specification in its entirety by reference.

### Technical Field

The present invention relates to a resin composition and a method of producing the same.

### BACKGROUND ART

An acrylonitrile-butadiene-styrene (ABS) copolymer is produced by subjecting styrene and acrylonitrile to a graft copolymerization onto a butadiene rubbery polymer. An ABS copolymer has rigidity, chemical resistance, impact resistance, and processability in a balanced manner, and it has excellent secondary processing characteristics such as impact strength, mechanical physical properties, surface glossiness, plating, printing, and painting, which is advantageous in that products having various colors can be produced.

Moreover, recently, the demand for matte plastic has been increasing in order to enhance the premium appearance of products. To cope with this demand, a method in which polymethyl methacrylate (PMMA) microparticles are co-extruded to manufacture a sheet by using an ABS resin as a base layer, a method in which reactive extrusion is used to carry out sheet extrusion using a polymer having a crosslinked form as a matting agent, or a method in which a crystalline polymer such as syndiotactic polystyrene (sPS) or polyamide (PA) is used to manufacture a sheet is known. However, in a case where the manufacturing is carried out by the above-described manufacturing method, there is a problem such as a significant decrease in the mechanical physical properties of the resin composition or a decrease in the processability thereof.

### Documents of Related Art

### Patent Document

(Patent document 0001) KR 1205204 B1

### DISCLOSURE OF THE INVENTION

### TECHNICAL PROBLEM

An object of the present invention is to provide a resin composition that has high mechanical physical properties such as scratch resistance while having matte characteristics, and has high surface uniformity.

Another object of the present invention is to provide a method of producing a resin composition that has high mechanical physical properties such as scratch resistance while having matte characteristics, and has high surface uniformity.

### TECHNICAL SOLUTION

(1)The present invention provides a resin composition comprising a graft copolymer containing a conjugated diene-based polymer, an aromatic vinyl monomer unit, and a vinyl cyanic monomer unit; a matrix copolymer; and a crosslinked copolymer containing a crosslinked moiety, the crosslinked copolymer being formed from an aromatic vinyl monomer unit, a vinyl cyanic monomer unit, and a crosslinking functional compound, wherein a particle diameter (D₅₀) of the crosslinked copolymer in a case where a cumulative percentage based on weight reaches 50% on a particle size distribution chart is 30 µm or more and 100 µm or less, an average H-W ratio of the crosslinked copolymer satisfies Mathematical Expression 1, the matrix copolymer includes a first matrix copolymer containing an aromatic vinyl monomer unit, a vinyl cyanic monomer unit, and an alkyl (meth)acrylate monomer unit; or a second matrix copolymer containing an aromatic vinyl monomer unit and a vinyl cyanic monomer unit and the first matrix copolymer and, in a case where the matrix copolymer includes the first matrix copolymer and the second matrix copolymer, a content of the first matrix copolymer is larger than a content of the second matrix copolymer.
   $0.05 \leq average H - W ratio \leq 1$
   In Mathematical Expression 1 above, the average H-W ratio is an average value of H-W ratios (a/b) calculated for the respective crosslinked copolymers, which are observed in a case of observing a surface of the resin composition with an optical microscope, a is a ½ value of a shortest axis length of each of the crosslinked copolymers observed in a case of observing a surface of the resin composition with an optical microscope, and b is a longest axis length of each of the crosslinked copolymers observed in a case of observing a surface of the resin composition with an optical microscope.
(2) The present invention provides the resin composition according to (1), wherein the crosslinking functional compound is a compound containing a vinyl functional group.
(3) The present invention provides the resin composition according to (1) or (2), wherein the crosslinking functional compound is allyl methacrylate.
(4) The present invention provides the resin composition according to any one of (1) to (3), wherein the D₅₀ of the crosslinked copolymer is 30 µm or more and 70 µm or less.
(5) The present invention provides the resin composition according to any one of (1) to (4), wherein in a case where the matrix copolymer includes the first matrix copolymer and the second matrix copolymer, the resin composition contains 60% by weight or more of the first matrix copolymer with respect to a total of the first matrix copolymer and the second matrix copolymer.
(6) The present invention provides the resin composition according to any one of (1) to (5), wherein with respect to a total of 100 parts by weight of the graft copolymer, the matrix copolymer, and the crosslinked copolymer, the resin composition contains 40 parts by weight more and 70 parts by weight or less of the matrix copolymer.
(7) The present invention provides the resin composition according to any one of (1) to (6), wherein with respect to a total of 100 parts by weight of the graft copolymer, the matrix copolymer, and the crosslinked copolymer, the resin composition contains 10 parts by weight more and 40 parts by weight or less of the crosslinked copolymer.
(8) The present invention provides the resin composition according to any one of (1) to (7), wherein a pencil hardness measured according to an evaluation method of ASTM D336 is equal to or harder than HB.
(9) The present invention provides the resin composition according to any one of (1) to (8), wherein a coefficient of variation of light reflection, which is calculated according to Mathematical Expression 1 below, is 1.5 or less.

   ${C}_{LR} = {D}_{L} / {M}_{L}$
   C_{LR} is a coefficient of variation of light reflection, D_{L} is a standard deviation of brightness, and M_{L} is an average brightness.
(10) The present invention provides the resin composition according to any one of (1) to (9), wherein a gloss level at 60°, which is measured with a gloss meter according to an evaluation method of ASTM D523, is 20 or less.

### ADVANTAGEOUS EFFECTS

The resin composition according to the present invention has excellent mechanical physical properties such as scratch resistance and has excellent surface uniformity while having matte characteristics.

The production method according to the present invention produces a resin composition that has excellent mechanical physical properties such as scratch resistance and has excellent surface uniformity while having matte characteristics.

### MODE FOR CARRYING OUT THE INVENTION

Hereinafter, the present invention will be described in more detail to facilitate understanding of the present invention.

The terms and words, which are used in the present specification and claims, are not to be restrictively construed in their ordinary or dictionary sense and are to be construed in the sense and with the concepts consistent with the technical ideas of the present invention based on the principle that an inventor may properly define concepts of terms to describe the present invention of the inventor in the best way.

The terms and measurement methods, which are used in the present invention, can be defined as follows unless otherwise defined.

The term "composition" used in the present invention includes a mixture of materials, which contains a reaction product and a decomposition product which are formed from materials of the composition, as well as the composition.

The term 'monomer unit', 'crosslinking unit', or 'crosslinked moiety', which is used in the present invention, may mean a repeating unit formed by a compound used as a monomer or a compound used as a crosslinking agent participating in a polymerization reaction or crosslinking reaction, a structure derived therefrom, or the substance itself.

The term 'derivative' that is used in the present invention may refer to a compound having a structure in which one or more hydrogen atoms constituting the original compound are substituted with a halogen group, alkyl group, or hydroxyl group.

### <Resin composition>

The present invention provides a resin composition.

The resin composition according to the present invention is a resin composition containing: a graft copolymer containing a conjugated diene-based polymer, an aromatic vinyl monomer unit, and a vinyl cyanic monomer unit; a matrix copolymer; and a crosslinked copolymer containing a crosslinked moiety, the crosslinked copolymer being formed from an aromatic vinyl monomer unit, a vinyl cyanic monomer unit, and a crosslinking functional compound, in which a particle diameter (D₅₀) of the crosslinked copolymer in a case where a cumulative percentage based on weight reaches 50% on a particle size distribution chart is 30 µm or more and 100 µm or less, an average H-W ratio of the crosslinked copolymer satisfies Mathematical Expression 1 below, the matrix copolymer includes a first matrix copolymer containing an aromatic vinyl monomer unit, a vinyl cyanic monomer unit, and an alkyl (meth)acrylate monomer unit; or a second matrix copolymer containing an aromatic vinyl monomer unit and a vinyl cyanic monomer unit and the first matrix copolymer and, in a case where the matrix copolymer includes the first matrix copolymer and the second matrix copolymer, a content of the first matrix copolymer is larger than a content of the second matrix copolymer.$0.05 \leq average H - W ratio \leq 1$

In Mathematical Expression 1 above, the average H-W ratio is an average value of H-W ratios (a/b) calculated for the respective crosslinked copolymers, which are observed in a case of observing a surface of the resin composition with an optical microscope,
a is a ½ value of a shortest axis length of each of the crosslinked copolymers observed in a case of observing a surface of the resin composition with an optical microscope, and
b is a longest axis length of each of the crosslinked copolymers observed in a case of observing a surface of the resin composition with an optical microscope.

It is general to allow existing matte products to have characteristics that diffused reflection may occur on the surface, by subjecting an injection mold to a surface treatment with a corrosion treatment to make the surface thereof rough and then injecting a resin. However, such a method has a problem in that it is difficult to achieve practical matting, it lacks processability due to the abrasion of the injection mold, and thus the method is not suitable for mass production.

On the other hand, there are molded products that aim to achieve matting through the post-treatment of low gloss products. For example, there is a method of co-extruding a film containing a crosslinked body to attach the film, thereby forming a pattern on the surface, or a method of applying a crosslinked body to the product and then imparting a pattern to the surface through UV curing. However, in this case, there is a limit to the achievable gloss level, and there is a problem in that surface uniformity is inferior.

The gloss level is a representative numerical value that can express glossiness (a high gloss level or a low gloss level) or unglossiness of a resin. In general, a commercially available matte molded product has a gloss level of more than 30, which cannot be considered substantially matte. However, in a case where the resin composition according to the present invention is used, it is possible to achieve a very low level of gloss level, and thus it is possible to realize a matte product.

In addition, according to one exemplary embodiment of the present invention, the resin composition has an excellent pencil hardness, has a low gloss level, and at the same time, has a low coefficient of variation of light reflection, which makes it possible to provide a molded product having a uniform surface. These characteristics can be realized by containing an aromatic vinyl-vinyl cyanic-acrylic crosslinked copolymer having a specific D₅₀ range and a specific average H-W ratio, and a first matrix copolymer containing an aromatic vinyl monomer unit, a vinyl cyanic monomer unit, and an alkyl (meth)acrylate monomer unit, and this crosslinked copolymer makes it possible to solve the problems of existing matte molded products.

In the resin composition according to one exemplary embodiment of the present invention, a pencil hardness measured according to an evaluation method of ASTM D 336 may be equal to or harder than HB.

In the resin composition according to one exemplary embodiment of the present invention, a gloss level at 60°, which is measured with a gloss meter according to an evaluation method of ASTM D523, may be 20 or less, and as a specific example, it may be 18 or less, 16 or less, 14 or less, 12 or less, 10 or less, 8 or less, or 6 or less.

Hereinafter, each component contained in the resin composition will be described in detail.

### 1. Crosslinked copolymer

According to one exemplary embodiment of the present invention, the crosslinked copolymer is such a crosslinked copolymer that imparts surface characteristics so that light can be diffusely reflected on the surface in the resin composition. The crosslinked copolymer is produced in a form having higher strength due to being crosslinked, whereby it may have a form of being uniformly distributed in the matrix resin. In a case where the crosslinked copolymer is contained in the resin composition, it is possible to improve impact strength to an excellent level while achieving a very low gloss level and a very low coefficient of variation of light reflection.

According to one exemplary embodiment of the present invention, the crosslinked copolymer may be contained such that the content thereof is 10 parts by weight more and 35 parts by weight or less with respect to 100 parts by weight of the resin composition. As a more specific example, it may be contained such that the content thereof is 11 parts by weight or more, 12 parts by weight or more, 13 parts by weight or more, 14 parts by weight or more, or 15 parts by weight or more, and it may be also contained such that the content thereof is 34 parts by weight or less, 33 parts by weight or less, 32 parts by weight or less, 31 parts by weight or less, or 30 parts by weight or less. In a case where the crosslinked copolymer is contained within the above-described range, the effects described above can be better realized.

According to one exemplary embodiment of the present invention, the crosslinked copolymer may contain a crosslinked moiety formed from a crosslinking functional compound, an aromatic vinyl monomer unit, and a vinyl cyanic monomer unit.

The crosslinked copolymer may be a random copolymer, and the compositions of the aromatic vinyl monomer unit and the vinyl cyanic monomer unit in the copolymer may be uniform. The fact that the compositions of the above monomer units are uniform may mean that the ratio of each monomer unit present in the polymer that goes through polymerization and grows by the polymerization reaction of the monomer is maintained uniformly. As a specific example, it may mean that as the polymerization progresses, that is, depending on the change in polymerization time in the polymerization, the ratio of each monomer unit forming the polymerization product is uniformly maintained in a case where a part of the polymerization product within the reactor is collected.

According to one exemplary embodiment of the present invention, the aromatic vinyl monomer unit and the vinyl cyanic monomer unit may each refer to a repeating unit formed by the participation of the aromatic vinyl monomer and the vinyl cyanic monomer in the polymerization reaction. As a specific example, the above polymerization reaction may be a radical polymerization reaction, and accordingly, it may refer to repeating units derived from carbon-carbon double bonds present in the aromatic vinyl monomer and the vinyl cyanic monomer.

According to one exemplary embodiment of the present invention, the crosslinked moiety may contain a crosslinking functional compound unit formed from a crosslinking functional compound, the crosslinking functional compound may contain one or more selected from the group consisting of an acrylic compound and an allyl compound, and the crosslinked moiety can be composed of units derived from these compounds.

The crosslinked copolymer according to one exemplary embodiment of the present invention may be such that the crosslinked moiety inside the crosslinked copolymer is very uniformly distributed, and the overall inter-chain fluidity may be allowed to be maintained by making the degree of distribution of the crosslinked moiety suitable.

According to one exemplary embodiment of the present invention, the crosslinking functional compound includes one or more selected from the group consisting of an acrylic compound and an aryl compound, as described above, and may contain a functional group such as a vinyl group or an acrylic group. Specifically, one or more selected from the group consisting of divinyl benzene, trivinyl benzene, ethylene glycol di(meth)acrylate, allyl (meth)acrylate, diallyl phthalate, diallyl maleate, triallyl isocyanurate, and trialkyl isocyanurate may be applied, and it may be divinyl benzene or allyl methacrylate.

According to one exemplary embodiment of the present invention, the crosslinked copolymer may contain the crosslinked moiety such that the content thereof is more than 0.05 parts by weight and less than 5 parts by weight with respect to the total of 100 parts by weight of the aromatic vinyl monomer unit and the vinyl cyanic monomer unit. As a more specific example, it may contain the crosslinked moiety such that the content thereof is 0.055 parts by weight or more, 0.06 parts by weight or more, 0.065 parts by weight or more, 0.07 parts by weight or more, 0.075 parts by weight or more, or 0.08 parts by weight or more, and it may also contain the crosslinked moiety such that the content thereof is 4.5 parts by weight or less, 4 parts by weight or less, 3.5 parts by weight or less, 3 parts by weight or less, 2.5 parts by weight, or 2 parts by weight or less. In a case where the above-described range is satisfied, the degree of crosslinking can be achieved at an appropriate level.

According to one exemplary embodiment of the present invention, the aromatic vinyl monomer for forming the aromatic vinyl monomer unit contained in the crosslinked copolymer may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and derivatives thereof, and it may specifically be styrene.

According to one exemplary embodiment of the present invention, the crosslinked copolymer may contain the aromatic vinyl monomer unit such that the content thereof is more than 60 parts by weight and 85 parts by weight or less with respect to the total of 100 parts by weight of the aromatic vinyl monomer unit and the vinyl cyanic monomer unit. As a more specific example, it may contain the aromatic vinyl monomer unit such that the content thereof is 62 parts by weight or more, 64 parts by weight or more, 66 parts by weight or more, 68 parts by weight or more, 70 parts by weight or more, or 72 parts by weight or more, and it may also contain the aromatic vinyl monomer unit such that the content thereof is 84 parts by weight or less, 83 parts by weight or less, 82 parts by weight or less, 81 parts by weight or less, 80 parts by weight or less, or 79 parts by weight or less.

According to one exemplary embodiment of the present invention, the vinyl cyanic monomer for forming the vinyl cyanic monomer unit contained in the crosslinked copolymer may be one or more selected from the group consisting of acrylonitrile, methacrylonitrile, ethacrylonitrile, and derivatives thereof, and as a specific example, it may be acrylonitrile.

According to one exemplary embodiment of the present invention, the crosslinked copolymer may contain the vinyl cyanic monomer unit such that the content thereof is more than 15 parts by weight and 40 parts by weight or less with respect to the total of 100 parts by weight of the aromatic vinyl monomer unit and the vinyl cyanic monomer unit. As a more specific example, is 16 parts by weight or more, 17 parts by weight or more, 18 parts by weight or more, 19 parts by weight or more, 20 parts by weight or more, or 21 parts by weight or more, and it may also contain the vinyl cyanic monomer unit such that the content thereof is 38 parts by weight or less, 36 parts by weight or less, 34 parts by weight or less, 32 parts by weight or less, 30 parts by weight or less, or 28 parts by weight or less.

In the crosslinked copolymer according to one exemplary embodiment of the present invention, a particle diameter (D₅₀) in a case where a cumulative percentage based on weight reaches 50% on a particle size distribution chart may be 30 µm or more and 100 µm or less. In the present invention, D₅₀ means the particle diameter at which the cumulative percentage based on weight reaches 50% on the particle size distribution chart, and it means the particle size in a case where the cumulative weight reaches 50% from a specimen having the smallest particle size on the particle size distribution chart. The D₅₀ of the crosslinked copolymer in the present invention can be measured using a laser diffraction measuring device, and as a specific example, it can be measured using a light diffraction particle size analyzer (manufacturer: Sympatec GmbH, product name: HELOS/KR).

In the crosslinked copolymer according to one exemplary embodiment of the present invention, the particle diameter (D₅₀) at which the cumulative percentage based on weight reaches 50% on the particle size distribution chart may be 32 µm or more, 34 µm or more, 36 µm or more, 38 µm or more, or 40 µm or more, and as a specific example, it may be 95 µm or less, 90 µm or less, 85 µm or less, 80 µm or less, 75 µm or less, 70 µm or less, 65 µm or less, 60 µm or less, 55 µm or less, or 50 µm or less. In a case where the D₅₀ of the crosslinked copolymer satisfies the above-described range, it is possible to realize a low gloss level and excellent surface characteristics in the resin composition. In a case where the D₅₀ of the crosslinked copolymer is larger than the above-described range, the surface unevenness due to the crosslinked copolymer increases in a case where the crosslinked copolymer is dispersed in the matrix, which may reduce the surface characteristics and the coefficient of variation of light reflection in the resin composition. In addition, in a case where the D₅₀ of the crosslinked copolymer is smaller than the above-described range, the surface unevenness of the crosslinked copolymer dispersed in the matrix decreases, which may increase the gloss level of the resin composition since diffused reflection does not occur efficiently.

In the crosslinked copolymer according to one exemplary embodiment of the present invention, the average H-W ratio may be 0.05 or more and 1 or less. In the present invention, the average H-W ratio of the crosslinked copolymer refers to the average value of the H-W ratio (a/b) of each crosslinked copolymer observed in a case of observing the surface of the resin composition with an optical microscope. a is a 1/2 value of a shortest axis length of each of the crosslinked copolymers observed in a case of observing a surface of the resin composition, and b is a longest axis length of each of the crosslinked copolymers observed in a case of observing a surface of the resin composition.

Specifically, the above-described crosslinked copolymer can be observed in a plane in an optical microscope image. The plane of the crosslinked copolymer observed in the optical microscope image is referred to as 'the plane', and only in a case where the center of gravity of the crosslinked copolymer is within 'the plane' assuming that the density of the crosslinked copolymer is constant, the longest axis of the crosslinked copolymer refers to the longest distance between both points where a straight line among the straight lines passing through the center of gravity intersect the surface of the plane, and the shortest axis of the crosslinked copolymer refers to the shortest distance between both points where a straight line among the straight lines passing through the center of gravity intersect the surface of the plane.

In the crosslinked copolymer according to one exemplary embodiment of the present invention, the average H-W ratio may be 0.052 or more, 0.054 or more, 0.056 or more, 0.058 or more, or 0.6 or more, and it may be 0.9 or less, 0.8 or less, 0.7 or less, 0.6 or less, 0.5 or less, 0.4 or less, or 0.3 or less. In a case where the average H-W ratio of the crosslinked copolymer satisfies the above-described range, it is possible to realize a low gloss level and excellent surface characteristics in the resin composition.

According to one exemplary embodiment of the present invention, the resin composition may have a gloss level of 20 or less, and as a specific example, it may be 18 or less, 16 or less, 14 or less, 12 or less, 10 or less, 8 or less, or 6 or less. In a case where the resin composition does not contain a crosslinked copolymer, the gloss level of the resin composition exceeds the above-described range, which may decrease the pencil hardness.

In addition, the resin composition according to one exemplary embodiment of the present invention makes it possible to provide a molded product having guaranteed surface uniformity by containing the crosslinked copolymer. The coefficient of variation of light reflection indicates the uniformity of the surface of the molded product while also reflecting the gloss level, and it is a numerical value that indicates whether diffused reflection occurs to an equivalent extent at any point on the surface of the molded product in a state where the entire surface is uniform while being matte.

The above coefficient of variation of light reflection can be measured using Python in the following method.
1) Capturing image of sample: Using a DSLR camera (Canon 750D) and a 200 mm x 200 mm surface light (White LED, Collimated Backlight LTS-3PFT), imaging is carried out by capturing an image of a prepared sample in a state where a distance between the camera and the sample is set to 40 cm, a distance between the sample and the light is set to 100 cm, and the angle is set to 90°.
2) Grayscale conversion of sample image: The image of the sample is subjected to conversion into grayscale (0 to 255) using the Open CV library. In this case, a grayscale value is assigned to each of the pixels in the sample image, and this grayscale value is defined as brightness.
3) Reconstruction of image: The above image is divided into grids having a size of 200 µm x 200 µm, and the brightness values (grayscale values) of the respective pixels within each grid are averaged to reconstruct the image. In this case, each grid has an averaged brightness value.
4) Brightness correction: The target grid is designated as a first zone, where the 8 grids adjacent to the first zone are designated as a second zone, and the 16 grids adjacent to the second zone are designated as a third zone. Then, as a correction factor for each zone, 1 is assigned to the first zone, -0.0625 is assigned to the second zone, and - 0.03125 is assigned to the third zone, and then the corrected brightness value of the target grid is derived according to Mathematical Expression 2 below. $L = 2 {L}^{1} + {\sum }_{k = 1}^{8} \left(-0.0625 {L}_{k}^{2}\right) + {\sum }_{m = 1}^{16} \left(-0.03125{L}_{m}^{3}\right)$

In Mathematical Expression 2 above, L is the brightness of the target grid, L1 is the brightness of the grids in the first zone, L21, L22, L23, ..., and L28 are respectively the brightnesses of the 8 grids in the second zone, and L31, L32, L33, ..., L316 are respectively the brightnesses the 16 grids in the third zone.

The above correction factor is used for readjusting the brightness in consideration of the visual suppression effect, and it may be to minimize errors caused by the phenomenon of optical illusion, by which the brightness of the target grid to be measured may be evaluated differently due to the brightness of the surrounding grids in a case where an observation is made with the naked eye. Specifically, it is more important to determine what is referred to as "matte", in terms of human visual perception in a case where a product is commercialized. Therefore, not only the values measured by the device is indicated to be matte, but also there is a need to be actually perceived as matte visually. As a result, such a correction factor as described above may be applied to the measured value so that the measured values derived from the device reach a level equivalent to the actual visual effect, considering the phenomenon of optical illusion.

5) Derivation of average and standard deviation: From the corrected brightness values of the respective grids, the average and the standard deviation are determined, and using the average value and the standard deviation of the brightness obtained in this way, the coefficient of variation of light reflection is derived through Mathematical Expression 3 below.${C}_{LR} = {D}_{L} / {M}_{L}$

In Mathematical Expression 3 above, C_{LR} is a coefficient of variation of light reflection, D_{L} is a standard deviation of brightness, and M_{L} is an average brightness.

According to one exemplary embodiment of the present invention, the coefficient of variation of light reflection of the resin composition may be 1.5 or less, and as a specific example, it may be 1.45 or less, 1.4 or less, 1.35 or less, 1.3 or less, 1.25 or less, or 1.2 or less. In a case where the coefficient of variation of light reflection exceeds the above-described range, the quality of surface appearance of the resin composition may deteriorate. In a case where the coefficient of variation of light reflection exceeds the above-described range, the surface is not uniform, which may mean that diffused reflection does not occur in any part of the surface.

### 2. Matrix copolymer

According to one exemplary embodiment of the present invention, the resin composition may contain a matrix copolymer. The copolymer serves as a matrix in the resin composition, and thus it can play a fundamental role in the realization of the excellent physical properties of the resin molded product.

According to one exemplary embodiment of the present invention, the matrix copolymer, and the graft copolymer, the above matrix copolymer may be contained such that the content thereof is 40 parts by weight or more and 70 parts by weight or less with respect to a total of 100 parts by weight of the crosslinked copolymer, the matrix copolymer, and the graft copolymer. As a still more specific example, the matrix copolymer may be contained such that the content thereof is 42 parts by weight or more, 44 parts by weight or more, 46 parts by weight or more, 48 parts by weight or more, or 50 parts by weight or more, and the matrix copolymer may be also contained such that the content thereof is 68 parts by weight or less, 66 parts by weight or less, 64 parts by weight or less, 62 parts by weight or less, or 60 parts by weight or less.

According to one exemplary embodiment of the present invention, the matrix copolymer may contain a first matrix copolymer containing an aromatic vinyl monomer unit, a vinyl cyanic monomer unit, and an alkyl (meth)acrylate monomer unit, or may contain, together with the first matrix copolymer, a second matrix containing an aromatic vinyl monomer unit and a vinyl cyanic monomer unit. In other words, the matrix copolymer according to one exemplary embodiment of the present invention includes the first matrix copolymer, where the matrix copolymer may not include the second matrix copolymer or may include both the first matrix copolymer and the second matrix copolymer.

### (1) First matrix copolymer

According to one exemplary embodiment of the present invention, the first matrix copolymer can serve to impart scratch resistance to the resin composition. The above first matrix copolymer may contain an aromatic vinyl monomer unit, a vinyl cyanic monomer unit, and an alkyl (meth)acrylate monomer unit.

According to one exemplary embodiment of the present invention, the aromatic vinyl monomer for forming the aromatic vinyl monomer units contained in the first matrix copolymer may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and their derivatives, and it may specifically be styrene.

According to one exemplary embodiment of the present invention, the vinyl cyanic monomer for forming the vinyl cyanic monomer unit contained in the first matrix copolymer may be one or more selected from the group consisting of acrylonitrile, methacrylonitrile, ethacrylonitrile, and their derivatives, and as a specific example, it may be acrylonitrile.

According to one exemplary embodiment of the present invention, the alkyl (meth)acrylate-based monomer for forming the alkyl (meth)acrylate-based monomer unit contained in the first matrix copolymer may be one or more selected from the group consisting of methyl (meth)acrylate, ethyl (meth)acrylate, propyl (meth)acrylate, butyl (meth)acrylate, 2-ethylhexyl (meth)acrylate, decyl (meth)acrylate, and lauryl (meth)acrylate, and specifically, the alkyl (meth)acrylate monomer may be one or more selected from the group consisting of methyl methacrylate, ethyl methacrylate, butyl methacrylate, methyl acrylate, ethyl acrylate, and butyl acrylate.

According to one exemplary embodiment of the present invention, the matrix copolymer includes the first matrix copolymer, where in a case where the matrix copolymer does not include the second matrix copolymer, the above first matrix copolymer may be contained such that the content thereof is 40 parts by weight or more and 70 parts by weight or less with respect to a total of 100 parts by weight of the crosslinked copolymer, the matrix copolymer, and the graft copolymer. As a still more specific example, the matrix copolymer may be contained such that the content thereof is 42 parts by weight or more, 44 parts by weight or more, 46 parts by weight or more, 48 parts by weight or more, or 50 parts by weight or more, and the matrix copolymer may be also contained such that the content thereof is 68 parts by weight or less, 66 parts by weight or less, 64 parts by weight or less, 62 parts by weight or less, or 60 parts by weight or less. In a case where the above-described range is satisfied, the scratch resistance of the resin composition can be improved.

### (2) Second matrix copolymer

According to one exemplary embodiment of the present invention, the second matrix copolymer can serve as a matrix in the resin composition. The above second matrix copolymer may contain an aromatic vinyl monomer unit and a vinyl cyanic monomer unit.

According to one exemplary embodiment of the present invention, the aromatic vinyl monomer for forming the aromatic vinyl monomer units contained in the second matrix copolymer may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and their derivatives, and it may specifically be styrene.

According to one exemplary embodiment of the present invention, the vinyl cyanic monomer for forming the vinyl cyanic monomer unit contained in the second matrix copolymer may be one or more selected from the group consisting of acrylonitrile, methacrylonitrile, ethacrylonitrile, and their derivatives, and as a specific example, it may be acrylonitrile.

According to one exemplary embodiment of the present invention, in a case where the matrix copolymer includes both the first matrix copolymer and the second matrix copolymer, a content of the first matrix copolymer may be larger than a content of the second matrix copolymer. In a case where a content of the first matrix copolymer is larger than a content of the second matrix copolymer, the scratch resistance of the resin composition can be exhibited.

According to one exemplary embodiment of the present invention, in a case where the matrix copolymer includes both the first matrix copolymer and the second matrix copolymer, the matrix copolymer may include 60% by weight or more of the first matrix copolymer with respect to the total of the first matrix copolymer and the second matrix copolymer. As a specific example, the matrix copolymer may include the first matrix copolymer such that the content thereof is 62% by weight or more, 64% by weight or more, 66% by weight or more, 68% by weight or more, or 70% by weight or more. In a case where the content of the first matrix copolymer satisfies the above-described range, the scratch resistance of the resin composition can be improved.

### 3. Graft copolymer

According to one exemplary embodiment of the present invention, the graft copolymer can serve to provide excellent moldability and impact resistance to the resin composition.

According to one exemplary embodiment of the present invention, the graft copolymer may contain a conjugated diene-based polymer, an aromatic vinyl monomer unit and a vinyl cyanic monomer unit, and specifically, it may be a graft copolymer having a core-shell structure, which includes a core containing a conjugated diene-based monomer unit; and a shell surrounding the core and containing an aromatic vinyl monomer unit and a vinyl cyanic monomer unit.

According to one exemplary embodiment of the present invention, the conjugated diene-based monomer for forming the conjugated diene-based monomer unit contained in the graft copolymer may be one or more selected from the group consisting of 1,3-butadiene, 2,3-dimethyl-1,3-butadiene, 2-ethyl-1,3-butadiene, 1,3-pentadiene, and isoprene, and as a specific example, it may be 1,3-butadiene.

According to one exemplary embodiment of the present invention, the aromatic vinyl monomer for forming the aromatic vinyl monomer units contained in the graft copolymer may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and their derivatives, and it may specifically be styrene.

According to one exemplary embodiment of the present invention, the vinyl cyanic monomer for forming the vinyl cyanic monomer unit contained in the graft copolymer may be one or more selected from the group consisting of acrylonitrile, methacrylonitrile, ethacrylonitrile, and derivatives thereof, and as a specific example, it may be acrylonitrile.

According to one exemplary embodiment of the present invention, the graft copolymer may be such that the graft copolymer includes 30% to 70% by weight of a core containing a conjugated diene-based unit; and 30% to 70% by weight of a shell surrounding the core and containing an aromatic vinyl monomer unit and a vinyl cyanic monomer unit. In addition, the shell may contain the aromatic vinyl monomer unit and the vinyl cyanic monomer unit at a weight ratio of 7:3 to 8:2, and in this case, the impact resistance, mechanical characteristics, and moldability of the copolymer may be more excellent.

According to one exemplary embodiment of the present invention, the graft copolymer may be contained such that the content thereof is 5 parts by weight more and 50 parts by weight or less with respect to 100 parts by weight of the resin composition. As a more specific example, it may be contained such that the content thereof is 7 parts by weight or more, 9 parts by weight or more, 11 parts by weight or more, 13 parts by weight or more, or 15 parts by weight or more, and it may be also contained such that the content thereof is 45 parts by weight or less, 40 parts by weight or less, 35 parts by weight or less, 30 parts by weight or less, or 25 parts by weight or less.

### 4. Other additives

The resin composition according to one exemplary embodiment of the present invention may further contain, as necessary, one or more additives selected from the group consisting of an impact modifier, a slip additive, a thermal stabilizer, an anti-dripping agent, an antioxidant, a light stabilizer, an ultraviolet blocking agent, a pigment, and an inorganic filler, and in this case, the additive may be used such that the content thereof is 5.0 parts by weight or less, or 0.1 to 1.0 parts by weight based on 100 parts by weight of the copolymer and the thermoplastic resin.

In addition, specific substances of the additives can be used without particular limitation as long as they are used in the thermoplastic resin composition. However, for example, for the above-described anti-dripping agent, one or more selected from the group consisting of Teflon, polyamide, polysilicon, PTFE (polytetrafluoroethylene), and a TFE-HFP (tetrafluoroethylene-hexafluoropropylene) copolymer can be used in terms of additional flame retardancy improvement, and for the inorganic filler, one or more selected from the group consisting of barium sulfate, a barium glass filler, and barium oxide can be used.

### <Method of producing resin composition>

The present invention provides a method of producing the resin composition.

The method of producing a resin composition according to the present invention includes at least a step (S1) of producing a crosslinked copolymer in which a particle diameter (D₅₀) in a case where a cumulative percentage based on weight reaches 50% on a particle size distribution chart is 100 µm or less, and an average H-W ratio satisfies Mathematical Expression 1 below; and a step (S2) of mixing the crosslinked copolymer produced in the step S1, a conjugated diene-based monomer, a graft copolymer containing an aromatic vinyl monomer unit and a vinyl cyanic monomer unit, and a matrix copolymer, where the matrix copolymer may contain a first matrix copolymer containing an aromatic vinyl monomer unit, a vinyl cyanic monomer unit, and an alkyl (meth)acrylate monomer unit, or may contain, together with the first matrix copolymer, a second matrix copolymer containing an aromatic vinyl monomer unit and a vinyl cyanide-based monomer unit, in a case where the matrix copolymer includes the first matrix copolymer and the second matrix copolymer, a content of the first matrix copolymer is larger than a content of the second matrix copolymer, and the step S1 includes a step (S1-1) of initiating a polymerization reaction by charging an aromatic vinyl monomer, a vinyl cyanic monomer, and a polymerization initiator into a reactor, and after the step S1-1, a step (S1-2) of carrying out polymerization by dividedly charging, into the reactor, a crosslinking agent including an acrylate-based compound or an allyl compound. $0.05 \leq average H - W ratio \leq 1$

In Mathematical Expression 1 above, the average H-W ratio is an average value of H-W ratios (a/b) calculated for the respective crosslinked copolymers, which are observed in a case of observing a surface of the resin composition with an optical microscope,
a is a ½ value of a shortest axis length of each of the crosslinked copolymers observed in a case of observing a surface of the resin composition with an optical microscope, and b is a longest axis length of each of the crosslinked copolymers observed in a case of observing a surface of the resin composition with an optical microscope.

### 1. Step (S1) of producing crosslinked copolymer

According to one exemplary embodiment of the present invention, the step (S1) is a step of producing a crosslinked copolymer in which a particle diameter (D₅₀) in a case where a cumulative percentage based on weight reaches 50% on a particle size distribution chart is 100 µm or less, and an average H-W ratio satisfies Mathematical Expression 1 above, and it may include a step (S1-1) of initiating a polymerization reaction by charging an aromatic vinyl monomer, a vinyl cyanic monomer, and a polymerization initiator into a reactor, and after the above-described step (S1-1), a step (S1-2) of carrying out polymerization by dividedly charging, into the reactor, a crosslinking agent including an acrylate-based compound or an allyl compound.

### (1) Step (S1-1) of initiating polymerization reaction

According to one exemplary embodiment of the present invention, the step (S1-1) is a step of initiating polymerization, and it may be such that the temperature of the reactor is raised to a predetermined temperature after charging a reaction solution into the reactor. Even in the above (S1) step, in a case where the internal temperature of the reactor rises to the predetermined temperature or higher, polymerization proceeds in the presence of a polymerization initiator, where the internal temperature of the reactor in the (S1) step may rise to about 60°C to 120°C and may preferably rise to 70°C to 110°C.

According to one exemplary embodiment of the present invention, in the step (S1-1), an aromatic vinyl monomer, a vinyl cyanic monomer, and a polymerization initiator can be charged into the reactor.

According to one exemplary embodiment of the present invention, the aromatic vinyl monomer to be charged in the (S1-1) step may be one or more selected from the group consisting of styrene, α-methylstyrene, α-ethylstyrene, p-methylstyrene, o-methylstyrene, o-t-butylstyrene, bromostyrene, chlorostyrene, trichlorostyrene, and their derivatives, and it may specifically be styrene.

The aromatic vinyl monomer may be charged such that the content thereof is 60 parts by weight to 95 parts by weight, 64 parts by weight to 90 parts by weight, 68 parts by weight to 85 parts by weight, or 72 parts by weight to 80 parts by weight with respect to the 100 parts by weight of the vinyl cyanic monomer and the aromatic vinyl monomer which are charged in the (S1-1) step. Within this range, the copolymer can be acquired with a high polymerization conversion rate, which can be a key point in achieving matting while maintaining the mechanical physical properties of the copolymer, and provides an effect of excellent compatibility.

According to one exemplary embodiment of the present invention, the vinyl cyanic monomer to be charged in the (S1-1) step may be one or more selected from the group consisting of acrylonitrile, methacrylonitrile, ethacrylonitrile, and derivatives thereof, and as a specific example, it may be acrylonitrile.

In addition, according to one exemplary embodiment of the present invention, the vinyl cyanic monomer may be charged such that the content thereof is 5 parts by weight to 40 parts by weight, 10 parts by weight to 36 parts by weight, 15 parts by weight to 32 parts by weight, or 20 parts by weight to 28 parts by weight with respect to the 100 parts by weight of the aromatic vinyl monomer and the vinyl cyanic monomer which are charged in the (S1-1) step. Within this range, the copolymer can be acquired with a high polymerization conversion rate, and an effect of excellent compatibility is provided while maintaining the mechanical physical properties of the copolymer.

According to one exemplary embodiment of the present invention, the method of producing the above-described crosslinked copolymer may be carried out by a suspension polymerization method, and an additive of one or more selected from the group consisting of a polymerization initiator, a dispersing agent, a dispersing aid, and a molecular weight control agent may be further contained in a solvent for carrying out polymerization in the above (S1-1) step, where the method of producing the above-described crosslinked copolymer can be carried out in the presence of these substances.

According to one exemplary embodiment of the present invention, the polymerization initiator is used to facilitate the initiation of the polymerization and is not specifically limited as long as it does not adversely affect the polymerization. However, it may be, for example, one or more selected from the group consisting of 2,5-dimethyl-2,5-di(t-butylperoxy) hexane, di(t-butylperoxy-isopropyl)benzene, t-butyl cumyl peroxide, di-(t-amyl)-peroxide, dicumyl peroxide, butyl 4,4-di(t-butylperoxy)valerate, t-butylperoxybenzoate, 2,2-di(t-butylperoxy)butane, t-amyl peroxybenzoate, t-butylperoxyacetate, t-butylperoxy-(2-ethylhexyl)carbonate, t-butylperoxyisopropyl carbonate, t-butyl peroxide-3,5,5-trimethyl-hexanoate, 1,1-di(t-butylperoxy)cyclohexane, t-amyl peroxyacetate, t-amylperoxy-(2-ethylhexyl)carbonate, 1,1-di(t-butylperoxy)-3,5,5-trimethylcyclohexane, 1,1-di(t-amylperoxy)cyclohexane, t-butyl-monoperoxy-maleate, 1,1'-azobis(hexahydrobenzonitrile), 1,1'-azobis(cyclohexane-1-cyano), and azobisisobutyronitrile, and specifically, it may be one or more selected from the group consisting of dicumyl peroxide, 1,1-di(t-butyl peroxide)cyclohexane, 1,1'-azobis(cyclohexanecarbonitrile), and azobisisobutyronitrile.

In addition, the above-described polymerization initiator can be used such that the content thereof is0.001 parts by weight to 0.5 parts by weight, specifically 0.003 parts by weight to 0.45 parts by weight or 0.06 parts by weight to 0.3 parts by weight, with respect to the 100 parts by weight of the aromatic vinyl monomer and the vinyl cyanic monomer which are charged in the (S1-1) step, and in a case where the polymerization initiator is used within the above-described range, it is possible to facilitate the polymerization reaction, thereby increasing the polymerization conversion rate.

According to one exemplary embodiment of the present invention, the dispersing agent may be one or more selected from the group consisting of a water-soluble polyvinyl alcohol, a partially saponified polyvinyl alcohol, polyacrylic acid, a copolymer of vinyl acetate and maleic anhydride, hydroxypropyl methylcellulose, gelatin, calcium phosphate, tricalcium phosphate, hydroxyapatite, sorbitan monolaurate, sorbitan trioleate, polyoxyethylene, sodium lauryl sulfate, sodium dodecylbenzenesulfonate, and sodium dioctylsulfosuccinate, and as a specific example, it may be tricalcium phosphate.

According to one exemplary embodiment of the present invention, the dispersing agent can be used such that the content thereof is 1.0 parts by weight to 3.0 parts by weight, 1.5 parts by weight to 2.5 parts by weight, or 1.5 parts by weight to 2.0 parts by weight with respect to the 100 parts by weight of the aromatic vinyl monomer and the vinyl cyanic monomer which are charged in the (S1-1) step, and within this range, in a case of increasing the dispersion stability of the monomers in the polymerization system, it is possible to produce a copolymer having more uniform particles.

In addition, according to one exemplary embodiment of the present invention, the method of producing the crosslinked copolymer may be carried out by further containing a dispersing aid during polymerization. As a specific example, the dispersing aid may be a polyoxyethylene-based dispersing aid, and more specifically, it may be a polyoxyethylene alkyl ether phosphate, and in this case, an effect of excellent polymerization stability is provided.

According to one exemplary embodiment of the present invention, the molecular weight control agent may be, for example, one or more selected from the group consisting of an α-methylstyrene dimer, t-dodecyl mercaptan, n-dodecyl mercaptan, and octyl mercaptan, carbon tetrachloride, methylene chloride, methylene bromide, tetraethyl thiuram disulfide, dipentamethylene thiuram disulfide, and diisopropyl xanthogen disulfide, and as a specific example, it may be t-dodecyl mercaptan.

According to one exemplary embodiment of the present invention, the molecular weight control agent to be charged in the (S1-1) step may be used such that the content thereof is 0.01 parts by weight to 0.40 parts by weight, 0.05 parts by weight to 0.30 parts by weight, or 0.10 to 0.25 parts by weight with respect to the 100 parts by weight of the aromatic vinyl monomer and the vinyl cyanic monomer which are charged in the (S1-1) step, and within this range, it is possible to produce a copolymer having a suitable weight average molecular weight.

### (2) Polymerization step (S1-2)

According to one exemplary embodiment of the present invention, the step (S1-2) is a step of dividedly charging a crosslinking agent that contains the above-described crosslinking functional compound, where the crosslinking agent may be dividedly charged two or more times or may be dividedly charged three or more times. In addition, the crosslinking functional compound includes one or more selected from the group consisting of an acrylic compound and an aryl compound, as described above, and may contain a functional group such as a vinyl group or an acrylic group.

In a case where the polymerization proceeds by charging the crosslinking agent only at the initial stage of the polymerization, the crosslinking effect may be relatively reduced. A high concentration of the crosslinking agent at the initial stage of the polymerization may increase the possibility of side reactions in which the crosslinking agents are bonded to each other. In addition, as the polymerization proceeds to the latter stage of the polymerization, the concentration of the crosslinking agent decreases, which makes it difficult for the crosslinked moieties within the copolymer chains to be uniformly distributed and makes the generation of the crosslinked copolymer unsmooth. As a result, the yield of the crosslinked copolymer may be significantly reduced. Such problems ultimately lead to an increase in gloss level and coefficient of variation of light reflection, and may even result in a decrease in impact strength due to the issue of the lack of uniformity.

According to one exemplary embodiment of the present invention, the crosslinking functional compound is charged in the step (S1-2), can start to be charged immediately after the step (S1-1), and it can be dividedly charged two or more times during polymerization and preferably, can be dividedly charged three or more times during polymerization.

According to one exemplary embodiment of the present invention, the time difference between the divided charging in a case where the crosslinking functional compound is charged in the step (S1-2) may be 1% to 30% of the total polymerization time.

In a case of providing a time difference between divided charging, in the crosslinked copolymer, the degree of crosslinking within the entire copolymer chain can be achieved at a suitable level while being uniform, and the crosslinking density is also excellent, which can act importantly in carrying out the function of providing diffused reflection on the surface of the resin molded product. In addition, the divided charging of the crosslinking agent may be carried out during 20% to 70% of the total polymerization time; however, it may be preferable to start and end the divided charging within this time range to provide sufficient crosslinking effect.

According to one exemplary embodiment of the present invention, the crosslinking functional compound that is divided and charged during the polymerization step (S1-2) can be charged in an amount of 0.05 parts by weight to 0.30 parts by weight with respect to 100 parts by weight of the aromatic vinyl monomer and the vinyl cyanic monomer charged in the step (S1-1), and preferably may be 0.05 parts by weight to 0.20 parts by weight, and more preferably may be 0.05 parts by weight to 0.15 parts by weight.

In addition, according to one exemplary embodiment of the present invention, the charging amounts of the crosslinking functional compound in the respective divided charging may be the same or different from each other, and it is preferable to control the deviation between the charging amounts to be small.

According to one exemplary embodiment of the present invention, in the above (S1-2) step, one or more of a molecular weight control agent and a polymerization initiator may be further contained with the crosslinking agent and then divided charged.

In this way, in a case where a molecular weight control agent and/or a polymerization initiator is contained and is dividedly charged together with the crosslinking functional compound in the above (S1-2) step, it is possible to more easily control the reactivity between monomers, the reactivity between the polymer chain and the crosslinking agent, and the like, and thus it is easy to achieve the control of the degree of crosslinking. As a result, the gloss level and the coefficient of variation of light reflection are low while maintaining the impact strength and the heat resistance at an excellent level, which makes it possible to obtain a molded product that is uniform and matte.

On the other hand, according to one exemplary embodiment of the present invention, the polymerization in the (S1-2) step may be carried out in a temperature range of 50°C to 150°C and may be carried out preferably at a temperature of 60°C to 130°C, and more preferably at a temperature of 65°C to 120°C. In a case of carrying out polymerization in the temperature range described above, it may be desirable in obtaining the final polymerization conversion rate and additionally polymer physical properties.

On the other hand, the (S1-1) step and the (S1-2) step according to one exemplary embodiment of the present invention may be carried out under stirring. In a case where the step (S1-1) and the (S1-2) according to one exemplary embodiment of the present invention are carried out under stirring at 500 rpm or more, even in a case where a pulverization step (S1-3) described later is omitted, the crosslinked copolymer to be produced can have a targeted particle diameter (D₅₀) at which the cumulative percentage based on weight reaches 50% on the particle size distribution chart and a targeted average H-W ratio.

Specifically, the (S1-1) step and the (S1-2) step according to one exemplary embodiment of the present invention may be carried out under stirring at 550 rpm or more, 600 rpm or more, 700 rpm or more, 750 rpm or more, or 800 rpm or more, and in this case, even in a case where a pulverization step (S1-3) described later is omitted, the crosslinked copolymer to be produced can have a targeted particle diameter (D₅₀) at which the cumulative percentage based on weight reaches 50% on the particle size distribution chart and a targeted average H-W ratio.

### (3) Pulverization step (S1-3)

According to one exemplary embodiment of the present invention, the (S1) step may further include a step (S1-3) of pulverizing the resultant product of the (S1-2) step in a case where the (S1-1) step or the (S1-2) step is carried out without stirring or carried out under stirring at less than 500 rpm. The (S1-3) step may be a process that allows the crosslinked copolymer to have a targeted particle diameter (D₅₀) at which the cumulative percentage based on weight reaches 50% on the particle size distribution chart and a targeted average H-W ratio.

According to one exemplary embodiment of the present invention, the step (S1-3) may be carried out with any one or more of an air jet mill, a rotary mill, a cutting mill, a ball mill, or a hammer mill.

### 2. Step (S2) of mixing crosslinked copolymer, matrix copolymer, and graft copolymer

According to one exemplary embodiment of the present invention, in the (S2) step, the crosslinked copolymer produced by the producing method as described above, a matrix copolymer, and a graft copolymer are mixed to produce a resin composition.

According to one exemplary embodiment of the present invention, in general, commercially available resins can be applied to the first matrix copolymer and the second matrix copolymer, which can be obtained through commercialized methods. The contents of the first matrix copolymer and the second matrix copolymer are as described above, and thus a detailed explanatory description therefor will be omitted hereinafter.

According to one exemplary embodiment of the present invention, in general, a commercially available resin can be applied to the graft copolymer, which can be obtained through a commercialized method For example, the above-described graft copolymer may be such a graft copolymer that is produced by subjecting a conjugated diene-based monomer to emulsion polymerization to produce a rubbery polymer core (or seed) and then adding a vinyl cyanic monomer and an aromatic vinyl monomer to the core to carry out emulsion graft polymerization.

### <Molded product>

The present invention provides a molded product containing the resin composition. For example, the above molded product can be applied to various industrial fields such as various electrical and electronic products and vehicle parts. A general molding method such as extrusion, injection, or casting can be applied as a molding method. In addition, for example, in injection molding, the molded product according to the present invention does not require the corrosion treatment of the surface of the mold as compared with a product that aims to provide a matte molded product by subjecting the surface of the die to a corrosion treatment, and even without carrying out a post-treatment of the molded product, it is possible to provide a molded product that has a matte and uniform surface in a state of having been subjected to injection molding.

Hereinafter, examples of the present invention will be described in detail so that a person skilled in the art can easily carry out the examples of the present invention. However, the present invention may be embodied in various forms different from each other and thus is not limited to the examples described herein.

### Examples and Comparative Examples

The substances used in examples and comparative examples are as follows.
**(1) Crosslinked copolymer:** The crosslinked copolymers produced in Examples 1 to 3 were used.

### Production Example 1

With respect to 100 parts by weight of a mixture consisting of 77 parts by weight of a styrene monomer and 23 parts by weight of acrylonitrile, 0.2 parts by weight of azobisisobutyronitrile (AIBN), 0.3 parts by weight of t-dodecyl mercaptan (TDDM), and 2.0 parts by weight of tricalcium phosphate were charged under stirring at 200 rpm, and the temperature was raised to 70°C. Then, while dividedly charging 0.2 parts by weight of t-dodecyl mercaptan (TDDM) and 0.1 parts by weight of allyl methacrylate as a crosslinking agent three times at one-hour intervals, suspension polymerization was carried out for 5 hours. Then, the resultant product was washed and dehydrated and then dried in a fluidized bed dryer at 85°C for 90 minutes to obtain a copolymer having an average particle size of 250 µm. Then, the copolymer was pulverized to obtain a crosslinked copolymer A having a powder form.

### Production Example 2

A crosslinked copolymer was produced in the same manner as in Example 1 to obtain a crosslinked copolymer B having a powder form, except that the stirring was carried out at 600 rpm without carrying out a separate pulverization process.

### Production Example 3

A crosslinked copolymer was produced in the same manner as in Example 1 to obtain a crosslinked copolymer C having a powder form, except that the stirring was carried out at 1,000 rpm without carrying out a separate pulverization process.

**(2) First matrix copolymer:** Product Name XT510, manufactured by LG Chem Ltd.

**(3) Second matrix copolymer:** Product Name 97HC, manufactured by LG Chem Ltd.

**(4) Graft copolymer:** Product Name DP270, manufactured by LG Chem Ltd.

### Experimental Example 1 - Measurement of physical properties of crosslinked copolymer

* D₅₀: Using a laser diffraction particle size analyzer (manufactured by Sympatec GmbH, product name: HELOS/KR), the D₅₀ of the crosslinked copolymer produced in each of Production Examples 1 to 7 was measured and is listed in Table 1 and Table 2 below.
* H-W ratio (a/b): The crosslinked copolymer produced in each of Examples 1 to 3, a matrix copolymer, and a graft copolymer were charged at a content described in Tables 1 and 2 below, and with respect to a total of 100 parts by weight of the crosslinked copolymer, the matrix copolymer, and the graft copolymer, 0.2 parts by weight of a thermal stabilizer and 1 part by weight of a slip additive were mixed to produce a resin composition of each of Examples 1 to 6 and Comparative Examples 1 to 3.

The resin composition produced in each of the above-described examples and comparative examples was charged into an extrusion kneading machine (processing temperature: 220°C), extruded, and then injected to prepare a sample. 1/2 of the shortest axis length was denoted as a, and the longest axis length was denoted as b in a case where the surface of the prepared sample was observed with an optical microscope (manufactured by OLYMPUS CORPORATION, product name: OLS4000), and then the H-W ratio (a/b) was calculated. The average value of the H-W ratio (a/b), which is calculated for each crosslinked copolymer, is listed in Table 1 and Table 2.

### Experimental Example 2 - Measurement of physical properties of resin composition

The crosslinked copolymer produced in each of Examples 1 to 3, a matrix copolymer, and a graft copolymer were charged at a content described in Tables 1 and 2 below, and with respect to a total of 100 parts by weight of the crosslinked copolymer, the matrix copolymer, and the graft copolymer, 0.2 parts by weight of a thermal stabilizer and 1 part by weight of a slip additive were mixed to produce a resin composition of each of Examples 1 to 6 and Comparative Examples 1 to 3.

The resin composition produced in each of the above-described examples and comparative examples was charged into an extrusion kneading machine (processing temperature: 220°C), extruded, and then injected to prepare a sample, and the physical properties of the resin composition were measured according to the following methods and are listed in Table 1 and Table 2 below.
* Gloss level: For a sample having a thickness of 0.4 mm, the gloss level of the surface at an at of 60° was measured with a gloss meter according to the evaluation method specified in ASTM D523. In the present invention, the evaluation was carried out such that the matte characteristics are excellent in a case where the gloss level is 6 or less.
* Izod impact strength: A sample having a thickness of 1/4 inch was subjected to measurement in accordance with a method of ASTM 256. In the present invention, the evaluation was carried out such that the impact resistance is excellent in a case where the Izod impact strength is 19 kg·cm/cm or more.
* Flow index: The flow index was measured under the conditions of 220°C/10 kg according to the evaluation method specified in ASTM D1238. In the present invention, the evaluation was carried out such that the flow index is excellent in a case where it is 10 g/10 min or more.
* Coefficient of variation to light reflection: A sample having a thickness of 0.4 mm was subjected to measurement using Python according to the following method.
   1) Capturing image of sample: Using a DSLR camera (Canon 750D) and a 200 mm x 200 mm surface light (White LED, Collimated Backlight LTS-3PFT), imaging was carried out by capturing an image of a prepared sample in a state where a distance between the camera and the sample distance was set to 40 cm, a distance between the sample and the light was set to 100 cm, and the angle was set to 90°.
   2) Grayscale conversion of sample image: The image of the sample was subjected to conversion into grayscale (0 to 255) using the Open CV library. In this case, a grayscale value was assigned to each of the pixels in the sample image, and this grayscale value was defined as brightness.
   3) Reconstruction of image: The above image was divided into grids having a size of 200 µm x 200 µm, and the brightness values (grayscale values) of the respective pixels within each grid were averaged to reconstruct the image. In this case, each grid has an averaged brightness value.
   4) Brightness correction: The target grid was designated as a first zone, where the 8 grids adjacent to the first zone were designated as a second zone, and the 16 grids adjacent to the second zone were designated as a third zone. Then, as a correction factor for each zone, 1 was assigned to the first zone, -0.0625 was assigned to the second zone, and -0.03125 was assigned to the third zone, and then the corrected brightness value of the target grid was derived according to Mathematical Expression 2 below. $L = 2 {L}^{1} + {\sum }_{k = 1}^{8} \left(-0.0625 {L}_{k}^{2}\right) + {\sum }_{m = 1}^{16} \left(-0.03125{L}_{m}^{3}\right)$

In Mathematical Expression 2 above, L is the corrected brightness value of the target grid, L¹ is the brightness of the grids in the first zone, L²₁, L²₂, L²₃, ..., and L²₈ are respectively the brightnesses of the 8 grids in the second zone, and L³₁, L³₂, L³₃, ..., L³₁₆ are respectively the brightnesses the 16 grids in the third zone.

5) Derivation of average and standard deviation: From the corrected brightness values of the respective grids, the average and the standard deviation were determined, and using the average value and the standard deviation of the brightness obtained in this way, the coefficient of variation of light reflection was derived through Mathematical Expression 3 below.${C}_{LR} = {D}_{L} / {M}_{L}$

C_{LR} is a coefficient of variation of light reflection, D_{L} is a standard deviation of brightness, and M_{L} is an average brightness.
* Quality of surface appearance: The number of pinholes in a sample having a unit area of 10 cm * 10 cm was measured, and the evaluation was carried out such that a case where the pinholes are not observed is denoted as ∘, a case where the number of observed pinholes is 1 to 7 is denoted as △, and a case where the number of observed pinholes is 8 or more is denoted as **×.**
* Pencil hardness: In accordance with the evaluation method specified in ASTM D336, a pencil from MITSUBISHI PENCIL COMPANY, LIMITED was set to be in contact with a coating surface at 45° and pressed with a load of 750 g so that a distance of at least 7 mm was horizontally pressed at a speed of 0.5 to 1 mm/s, and then it was observed whether the pencil core has a scar, and the most strong hardness at which the pencil does not have a scar was defined as the pencil hardness. (9H > 8H > 7H > 6H > 5H > 4H > 3H > 2H > H > F > HB > B > 2B > 3B > 4B > 5B > 6B > 7B > 8B > 9B)

**[Table 1]**

| | | Example | | | | | |
|---|---|---|---|---|---|---|---|
| | | 1 | 2 | 3 | 4 | 5 | 6 |
| Crosslinked copolymer | Type | A | A | A | A | B | C |
| | D₅₀ (µm) | 40 | 40 | 40 | 40 | 70 | 40 |
| | Average H-W ratio | 0.1 | 0.1 | 0.1 | 0.1 | 0.08 | 0.11 |
| | Content (parts by weight) | 20 | 30 | 20 | 30 | 30 | 30 |
| First matrix copolymer (parts by weight) | | 60 | 50 | 42 | 35 | 50 | 50 |
| Second matrix copolymer (parts by weight) | | - | - | 18 | 15 | - | - |
| Graft copolymer (parts by weight) | | 20 | 20 | 20 | 20 | 20 | 20 |
| Gloss level | | 6 | 5 | 6 | 5 | 8 | 5 |
| Pencil hardness | | F | F | F | F | F | F |
| Flow index (g/10 min) | | 4 | 2 | 4 | 2 | 2 | 2 |
| Impact strength (kg·cm/cm) | | 20 | 19 | 19 | 19 | 19 | 20 |
| Coefficient of variation of light reflection | | 1.2 | 1.1 | 1.1 | 1.1 | 1.4 | 1.1 |
| Quality of surface appearance | | ○ | ○ | ○ | ○ | ○ | ○ |

**[Table 2]**

| | | Comparative Example | | |
|---|---|---|---|---|
| | | 1 | 2 | 3 |
| Crosslin | Type | A | A | - |
| ked copolymer | D₅₀ (µm) | 40 | 40 | - |
| | Average H-W ratio | 0.1 | 0.1 | - |
| | Content (parts by weight) | 30 | 20 | - |
| First matrix copolymer (parts by weight) | | - | 30 | 80 |
| Second matrix copolymer (parts by weight) | | 50 | 30 | - |
| Graft copolymer (parts by weight) | | 20 | 20 | 20 |
| Gloss level | | 5 | 6 | 90 |
| Pencil hardness | | B | B | B |
| Flow index (g/10 min) | | 2 | 4 | 5 |
| Impact strength (kg·cm/cm) | | 20 | 19 | 25 |
| Coefficient of variation of light reflection | | 1.1 | 1.1 | 1.0 |
| Quality of surface appearance | | ○ | ○ | ○ |

Referring to Table 1 and Table 2, it could be confirmed that the resin compositions of Examples 1 to 6, which contain a crosslinked copolymer in which D₅₀ is 100 µm or less and the average H-W ratio satisfies the desirable range, and contain an appropriate amount of the first matrix copolymer and/or the second matrix copolymer, have an excellent gloss level, an excellent flow index, an excellent impact strength, an excellent quality of surface appearance, and an excellent pencil hardness.

It could be confirmed that in Comparative Example 1, which does not contain the first matrix copolymer, the pencil hardness decreases as compared with Examples 1 to 6.

It could be confirmed that in Comparative Example 2 in which the matrix copolymer includes the first matrix copolymer and the second matrix copolymer, where a content of the first matrix copolymer is equal to a content of the second matrix copolymer, the pencil hardness decreases as compared with Examples 1 to 6.

It could be confirmed that in Comparative Example 3, which does not contain a crosslinked copolymer, the gloss level and the pencil hardness are significantly reduced although the excellent quality of surface appearance is ensured as compared with Examples 1 to 6.

## Claims

1. A resin composition comprising:
a graft copolymer containing a conjugated diene-based polymer, an aromatic vinyl monomer unit, and a vinyl cyanic monomer unit;
a matrix copolymer; and
a crosslinked copolymer containing a crosslinked moiety being formed from a crosslinking functional compound, an aromatic vinyl monomer unit, and a vinyl cyanic monomer unit,
wherein the crosslinked copolymer has a particle diameter (D₅₀), that is the particle diameter corresponding to the point when a cumulative percentage based on weight reaches 50% on a particle size distribution chart, of 30 µm or more and 100 µm or less,
an average H-W ratio of the crosslinked copolymer satisfies Mathematical Expression 1 below,
the matrix copolymer includes a first matrix copolymer containing an aromatic vinyl monomer unit, a vinyl cyanic monomer unit, and an alkyl (meth)acrylate monomer unit; or a second matrix copolymer containing an aromatic vinyl monomer unit and a vinyl cyanic monomer unit and the first matrix copolymer and,
in a case where the matrix copolymer includes the first matrix copolymer and the second matrix copolymer, a content of the first matrix copolymer is larger than a content of the second matrix copolymer, $0.05 \leq average H - W ratio \leq 1$
where, in Mathematical Expression 1 above,
the average H-W ratio is an average value of H-W ratios (a/b) calculated for the respective crosslinked copolymers, which are observed in a case of observing a surface of the resin composition with an optical microscope,
a is a ½ value of a shortest axis length of each of the crosslinked copolymers observed in a case of observing a surface of the resin composition with an optical microscope, and
b is a longest axis length of each of the crosslinked copolymers observed in a case of observing a surface of the resin composition with an optical microscope.

2. The resin composition according to claim 1, wherein the crosslinking functional compound is a compound containing a vinyl functional group.

3. The resin composition according to claim 1, wherein the crosslinking functional compound is allyl methacrylate.

4. The resin composition according to claim 1, wherein the D₅₀ of the crosslinked copolymer is 30 µm or more and 70 µm or less.

5. The resin composition according to claim 1, wherein in a case where the matrix copolymer includes the first matrix copolymer and the second matrix copolymer, the resin composition contains 60% by weight or more of the first matrix copolymer with respect to the first matrix copolymer and the second matrix copolymer.

6. The resin composition according to claim 1, wherein with respect to a total of 100 parts by weight of the graft copolymer, the matrix copolymer, and the crosslinked copolymer, the resin composition contains 40 parts by weight more and 70 parts by weight or less of the matrix copolymer.

7. The resin composition according to claim 1, wherein with respect to a total of 100 parts by weight of the graft copolymer, the matrix copolymer, and the crosslinked copolymer, the resin composition contains 10 parts by weight more and 40 parts by weight or less of the crosslinked copolymer.

8. The resin composition according to claim 1, wherein a pencil hardness measured according to an evaluation method of ASTM D336 is equal to or harder than HB.

9. The resin composition according to claim 1, wherein a coefficient of variation of light reflection, which is calculated according to Mathematical Expression 1 below, is 1.5 or less, ${C}_{LR} = {D}_{L} / {M}_{L}$ C_{LR} is a coefficient of variation of light reflection, D_{L} is a standard deviation of brightness, and M_{L} is an average brightness.

10. The resin composition according to claim 1, wherein a gloss level at 60°, which is measured with a gloss meter according to an evaluation method of ASTM D523, is 20 or less.
